Europäisches Patentamt

European Patent Office

Office européen des brevets

(19)

(11) Veröffentlichungsnummer : **0 096 026**
**B1**

# (12) EUROPÄISCHE PATENTSCHRIFT

(45) Veröffentlichungstag der Patentschrift :
**26.03.86**

(21) Anmeldenummer : **82900103.1**

(22) Anmeldetag : **17.12.81**

(86) Internationale Anmeldenummer :
**PCT/EP 81/00199**

(87) Internationale Veröffentlichungsnummer :
**WO/8302083 (23.06.83 Gazette 83/15)**

(51) Int. Cl.⁴ : **B 26 D   7/26**

(54) **SCHNEIDWERKZEUGEINHEIT.**

(43) Veröffentlichungstag der Anmeldung :
**21.12.83 Patentblatt 83/51**

(45) Bekanntmachung des Hinweises auf die Patenterteilung : **26.03.86 Patentblatt 86/13**

(84) Benannte Vertragsstaaten :
**AT BE CH DE FR GB LI LU NL SE**

(56) Entgegenhaltungen :
**FR-A-   612 303**
**FR-A- 2 340 170**
**US-A- 2 840 399**
**US-A- 2 992 479**
**US-A- 3 228 102**

(73) Patentinhaber : **MAWAG MASCHINENBAU AG**
**Feldlistrasse 31 a**
**CH-9013 St. Gallen (CH)**

(72) Erfinder : **SPOERNDLI, Max**
**Höhenstrasse 16**
**CH-9032 Engelburg (CH)**
Erfinder : **BLUM, Willi**
**Bruggwaldstrasse 38**
**CH-9008 St. Gallen (CH)**

(74) Vertreter : **Lusuardi, Werther Giovanni, Dr.**
**Patentanwalt Stockerstrasse 8**
**CH-8002 Zürich (CH)**

**Beschreibung**

Die Erfindung betrifft eine Schneidwerkzeugeinheit insbesondere für eine Blech-Rollschere wie sie im Oberbegriff von Anspruch 1 gekennzeichnet ist.

Durch die DE-AL-27 04 531 bzw. die GB-A-1 574 421 ist eine als Schneidwerkzeugträger ausgebildete Nabe bekanntgeworden, welche die im Oberbegriff von Anspruch 1 angeführten Merkmale aufweist. Hierbei wird das Druckmittel entlang der Nabenbohrung in spiralförmig angeordneten Rillen verteilt und kann dann an den beiden Enden der Nabenbohrung austreten, welches auf die umliegenden Maschinenteile und insbesondere auf das an der Nabe befestigte Schneidmesser gelangt. Dies hat zur Folge, dass das als Druckmittel verwendete Oel von diesen Teilen auf das geschnittene Blech gelangt, welches anschliessend z. B. zu Konservendosen verarbeitet wird. Beim Schweissen dieser Dosen können aufgrund der Oelreste Fehlschweissungen entstehen, ausserdem dürfen an den Dosen aus lebensmittel-rechtlichen Gründen keine Reste von Verschmutzungen, -insbesonders schwer entfernbaren Oelverschmutzungen — Vorhanden sein.

Da das Aufweiten der Nabe mittels Drucköl nicht nur bei der Erstmontage sondern auch zum axialen Neu-Einstellen der Schneidmesser auch nach der Inbetriebnahme der Blech-Rollschere öfters erfolgt, sind derartige Verschmutzungen des Bleches bei der in oben genannter Schrift gezeigten Nabe öfters möglich.

Nachteilig ist weiter, dass zum Auswechseln der einem starken Verschleiss unterworfenen, auf der Nabe angeordneten Führungsringe die Welle und die Nabe demontiert werden müssen, und dass das an der Nabe mittels eines Ringes getrennt anschraubbare Schneidmesser und der auf der Welle fest angeordnete Montagekonus zum Aufschieben der mit Drucköl aufgeweiteten Nabe keine kompakte Bauweise der Blech-Rollschere zulassen.

Aufgabe der vorliegenden Erfindung ist die Schaffung einer Schneidwerkzeugeinheit der eingangs genannten Art, welche bei einer kompakten Bauweise die Montage der Nabe und ein axiales Einstellen des Schneidmessers auf der Welle ohne Verschmutzung der umliegenden Maschinenteile — insbesonders des Schneidmessers — durch das Druckmittel ermöglicht.

Erfindungsgemäss wird dies durch die im kennzeichnenden Teil von Anspruch 1 angeführten Merkmale gelöst.

Weitere vorteilhafte Ausgestaltungen der Erfindung sind in den abhängigen Ansprüchen gekennzeichnet.

Durch die Abführung des eingeführten Druckmittels mittels einer Leitung wird dessen Austreten zwischen Nabenbohrung und Welle verhindert, so dass keine Verschmutzung des Schneidmessers oder anderer Teile mit dem Druckmittel möglich ist.

Durch das direkte Verbinden des Schneidmessers mit der Nabe durch Klebung und durch die Verwendung einer getrennten Montagebüchse beim Aufschieben der Nabe auf die Welle kann die Schneidwerkzeugeinheit als auch die gesamte Blech-Rollschere wesentlich kompakter ausgebildet werden.

Die zweiteilige Ausbildung des Führungsringes ermöglicht dessen leichte Auswechslung bei Verschleiss ohne Demontage der gesamten Welle.

Die Erfindung ist in den beiliegenden Zeichnungen beispielsweise dargestellt und nachfolgend beschrieben.

Es zeigen :

Figur 1 einen Teilausschnitt im Längsschnitt einer Schneidwerkzeugeinheit,

Figur 2 eine Seitenansicht, teils im Schnitt entlang der Linie II - II von Fig. 1, und

Figur 3 eine Teilansicht zweier Schneidwerkzeugeinheiten einer Blech-Rollschere mit deren Wellenlagerung.

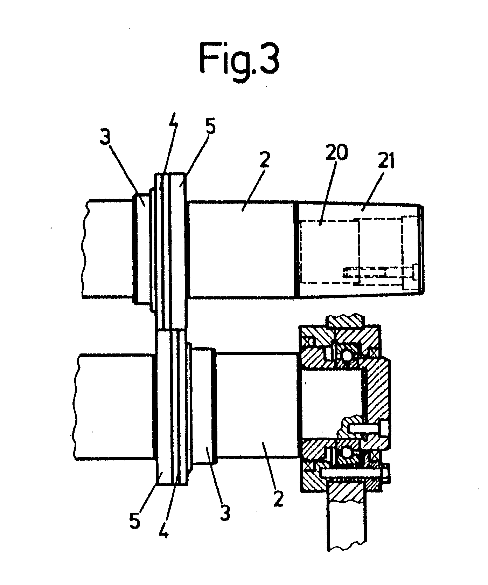

Eine Blech-Rollschere weist, wie aus Fig. 3 ersichtlich, zwei übereinander angeordnete Wellen 2 auf, an welchen mehrere Schneidwerkzeuge 4 jeweils zueinander gegenüberliegend angeordnet sind, welche jeweils eine Schneidwerkzeugeinheit 1 bilden.

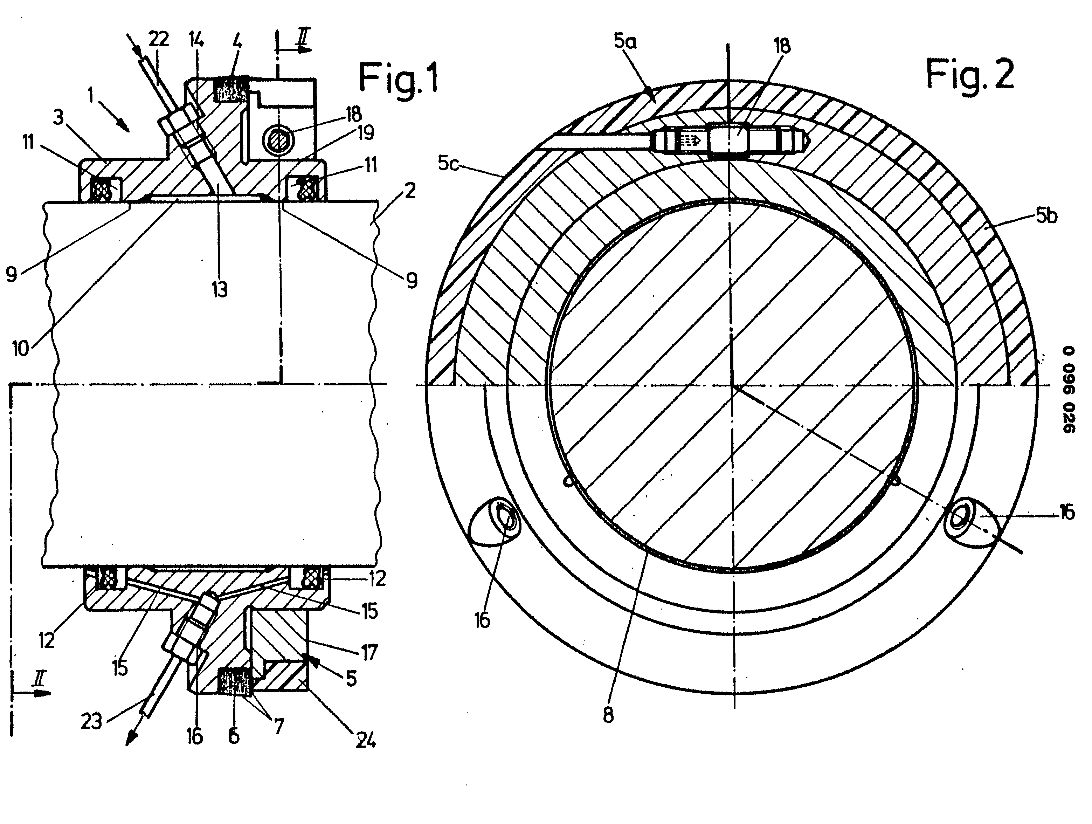

Fig. 1 zeigt einen Teil-Längsschnitt von einer Schneidwerkzeugeinheit 1 mit einem, auf einer der Wellen 2 angeordneten Schneidwerkzeug. Die Schneidwerkzeugeinheit 1 weist eine mit Presssitz auf der Welle 2 befestigte Nabe 3 auf, an welcher ein Schneidmesser 4 und ein Führungsring 5 befestigt ist. Das vorzugsweise aus Hartmetall bestehende ringförmige Schneidmesser 4 ist direkt auf einem Zentriersitz 6 der Nabe 3 mittels eines Klebers befestigt, wobei der genaue Rundschliff der Schneidkanten 7 nach der Befestigung erfolgt. Durch die direkte Befestigung wird eine kompaktere Bauweise der Schneidwerkzeugeinheit und eine höhere Genauigkeit des Rund- und Planlaufes der Schneidkanten 7 erreicht.

Die Klebeverbindung ermöglicht aber trotzdem ein Entfernen eines ausgebrochenen Schneidmessers und Ersetzen durch ein Neues.

Die Nabenbohrung 8 weist in der Mitte von zwei, die Presssitzverbindung zwischen Nabe und Welle bildende Auflageflächen 9 eine ringförmige Ausnehmung 10 auf.

Anschliessend an die Auflageflächen 9 sind an beiden Enden der Nabenbohrung 8 ringförmige Kammern 11 für die Aufnahme jeweils einer Dichtung 12 — vorzugsweise ein Rundgummiring oder ein Quadro-Ring — und als Sammelkanal für das zwischen den Auflageflächen 9 und der Welle 2 ausfliessende Druckmittel angeordnet.

Die ringförmige Ausnehmung 10 ist mittels einer Bohrung 13 mit einem ein Gewinde aufweisenden Anschluss 14 für die Zuführung des Druckmittels verbunden.

Die beiden Kammern 11 sind durch Bohrungen 15 mit einem Anschluss 16 für die Abführung des Druckmittels verbunden, wobei zur besseren Zugänglichkeit bei den untereinander angeordneten Naben zwei derartige Anschlüsse 16 umfangsmässig versetzt angeordnet sind (siehe Fig. 2).

Der Führungsring 5 besteht aus einem inneren metallischen Ring 17 und einem äusseren aus Kunststoff, z. B. einem Elastomer hergestellten Ring 24. Er ist aus zwei Halbringhälften 5a, 5b zusammengesetzt, welche mittels zwei, jeweils zwei verschiedene Gangrichtungen aufweisende Schrauben 18 fugenlos miteinander verbunden sind. Durch die Zweiteiligkeit ist der auf einem Zentrieransatz 19 angeordnete Führungsring 5 bei Verschleiss leicht auswechselbar.

Wie aus Fig. 3 ersichtlich, werden jeweils gegenseitig die auf einer Welle angeordneten Schneidmesser 4 durch die auf der anderen Welle angeordneten Führungsringe 5 direkt abgestützt.

Zur Montage der Naben 3 auf die Welle 2 wird, wie aus Fig. 3 ersichtlich, auf den für die Anordnung der Wellenlagerung vorgesehenen Zapfen 20 eine im Aussendurchmesser leicht konische Montagebüchse 21 befestigt. Die Nabe 3 wird dann so weit wie möglich auf die Montagebüchse aufgeschoben und dann durch ein in die ringförmige Ausnehmung 10 eingebrachtes Druckmittel so weit in der Nabenbohrung ausgedehnt, bis sie auf die Welle 2 geschoben werden kann.

Zur Einbringung des Druckmittels — vorzugsweise Drucköl — wird am Anschluss 14 eine Zufuhrleitung 22 und an einem der Anschlüsse 16 eine Abflussleitung 23 eines weiter nicht dargestellten Druckerzeugers angeschlossen.

Hierbei gelangt das Druckmittel aus der ringförmigen Ausnehmung 10 zwischen den Auflageflächen 9 und der Umfangsfläche der Welle 2 bis in die beidseitigen Kammern 11, wo es aufgefangen wird und über die Bohrungen 15 und die am Anschluss 16 angeschraubte Abflussleitung 23 zum Druckerzeuger oder einem anderen Auffanggefäss zurückgeleitet wird. Die Dichtungen 12 verhindern einen Austritt des Druckmittels zwischen Nabe und Welle und streifen gleichzeitig beim Verschieben der Nabe das Druckmittel von der Welle zu der Kammer hin ab.

Soll die Blech-Rollschere auf eine andere Breite der zu schneidenden Blechstreifen eingerichtet werden, oder müssen die Schneidmesser nach deren Nachschleifen auf der Welle neu zueinander ausgerichtet werden, erfolgt dies ebenfalls durch Aufweiten der Naben mittels des Druckmittels wobei dann diese genau in axialer Richtung auf der Welle durch leichtes Verschieben neu eingestellt werden können. Bei Nichtgebrauch der Anschlüsse 14, 16 während dem Betrieb sind diese mit Stopfen verschlossen.

## Patentansprüche

1. Schneidwerkzeugeinheit (1), insbesonders für eine Blech-Rollschere für die Dosen-Herstellung, mit einer, das Schneidmesser (4) und einen Führungs-Ring (5) tragenden, auf einer rotierenden Welle (2) angeordneten Nabe (3), welche einen Anschluss (14) zur Zuführung eines Druckmittels in die Nabenbohrung (8) zwischen Nabe und Welle aufweist, um die Nabe radial auszudehnen, wenn sie auf der Welle mit Presssitz zwischen Nabe und Welle montiert ist bzw. wird, dadurch gekennzeichnet, dass die Nabenbohrung (8) mit mindestens einem weiteren Anschluss (16) zur Abführung des Druckmittels mittels einer Leitung (23) verbunden ist.

2. Schneidwerkzeugeinheit nach Anspruch 1, dadurch gekennzeichnet, dass die Nabenbohrung (8) eine ringförmige Ausnehmung (10) aufweist, welche mit dem Anschluss (14) für die Zuführung des Druckmittels verbunden ist.

3. Schneidwerkzeugeinheit nach einem der Ansprüche 1 oder 2, dadurch gekennzeichnet, dass an den beiden Enden der Nabenbohrung (8) je eine ringförmige Kammer (11) angeordnet ist, welche mit dem Anschluss (16) zur Abführung des Druckmittels verbunden sind.

4. Schneidwerkzeugeinheit nach Anspruch 3, dadurch gekennzeichnet, dass in jeder Kammer (11) eine die Nabe (3) nach aussen abdichtende Dichtung (12) angeordnet ist.

5. Schneidwerkzeugeinheit nach Anspruch 4, dadurch gekennzeichnet, dass die Dichtung (12) als Rundgummiring bzw. als Quadro-Ring ausgebildet ist.

6. Schneidwerkzeugeinheit nach einem der Ansprüche 1 bis 5, dadurch gekennzeichnet, dass das Schneidmesser (4) mittels einer Klebeverbindung auf einem Zentriersitz (6) der Nabe (3) befestigt ist.

7. Schneidwerkzeugeinheit nach einem der Ansprüche 1 bis 6, dadurch gekennzeichnet, dass der Führungsring (5) durch in Achsrichtung verlaufende Trennebenen mindestens zweiteilig ausgebildet ist.

8. Schneidwerkzeugeinheit nach Anspruch 7, dadurch gekennzeichnet, dass die Teile des Führungsringes (5) mittels quer zu den Trennebenen angeordnete Schrauben (18) fugenlos verbindbar sind.

9. Schneidwerkzeugeinheit nach einem der Ansprüche 1 bis 8, dadurch gekennzeichnet, dass zum Aufschieben der Nabe (3) auf die Welle (2) eine im Aussendurchmesser leicht konische Montagebüchse (21) vorgesehen ist, welche mit dem Ende der jeweiligen Welle (2) verbindbar und nach der Montage der Nabe (3) wieder entfernbar ist.

10. Schneidwerkzeugeinheit nach Anspruch 9, dadurch gekennzeichnet, dass die Montagebüchse (21) auf einem Zapfen (20) für die Wellenlagerung zentriert befestigbar ist.

## Claims

1. Cutting tool unit (1), especially for a sheet metal roller cutter for the production of cans with a hub (3) carrying the cutting knife (4) and the guide ring (5) and disposed on a rotating shaft (2) which hub has a connection (14) to the feed of a pressure agent into the hub bore (8) between hub and shaft, in order to radially expand the hub, whenever it is or will be mounted on the shaft with pressure fit between hub and shaft, characterized in that the hub bore (8) is connected with at least one additional connection (16) and for the purpose of carrying off the pressure agent by means of a line (23).

2. Cutting tool unit as in claim 1, characterized in that the hub bore (8) has an annular recess (10) which is connected with the connection (14) for the feeding-in of the pressure agent.

3. Cutting tool unit as in one of the claims 1 or 2, characterized in that always one annular chamber (11) is disposed at the two ends of the hub bore (8), which chamber is connected with the connection (16) for carrying off the pressure agent.

4. Cutting tool unit as in claim 3, characterized in that a seal (12) sealing the hub (3) to the outside is disposed in every chamber (11).

5. Cutting tool unit as in claim 4, characterized in that the seal (12) is developed as a round rubber ring or as a quadro-ring.

6. Cutting tool unit as in one of the claims 1 to 5, characterized in that the cutting knife (4) is attached by means of an adhesive connection on a centering seat (6) of the hub (3).

7. Cutting tool unit as in one of the claims 1 to 6, characterized in that the guide ring (5) is developed at least in two parts by separating planes running in axial direction.

8. Cutting tool unit as in claim 7, characterized in that the parts of the guide ring (5) are connectable without joint by means of screws (18) disposed transversely to the separating planes.

9. Cutting tool unit as in one of the claims 1 to 8, characterized in that for the purpose of slipping the hub (3) onto the shaft (2), a mounting bushing (21) slightly conical in its outside diameter has been provided which may be connected with the end of the pertinent shaft (2) and which may be removed again after the mounting of the hub (3).

10. Cutting tool unit as in claim 9, characterized in that the mounting bushing (21) may be attached centered on a peg (20) for the shaft mounting.

**Revendications**

1. Unité d'outil coupant (1), en particulier pour une cisaille rotative à tôle pour la fabrication de boîtes, avec un moyeu (3) disposé sur un arbre rotatif (2) portant le couteau à tailler (4) et un anneau de guidage (5) et qui comporte un raccord (14) pour l'amenage d'un fluide sous pression dans l'alésage (8) du moyeu entre moyeu et arbre pour élargir radialement le moyeu quand il est monté, respectivement quand on le monte, sur l'arbre avec ajustement pressé entre moyeu et arbre, caractérisée en ce que l'alésage (8) du moyeu est connecté moyennant une conduite (23) avec au moins un autre raccord (16) pour la décharge du fluide sous pression.

2. Unité d'outil coupant selon la revendication 1, caractérisée en ce que l'alésage (8) du moyeu possède une rainure annulaire (10) connectée avec le raccord (14) pour l'amenage du fluide sous pression.

3. Unité d'outil coupant selon une des revendications 1 ou 2, caractérisée en ce qu'à chacune des deux extrémités de l'alésage (8) du moyeu une chambre annulaire (11) est disposée qui est connectée avec le raccord (16) pour la décharge du fluide sous pression.

4. Unité d'outil coupant selon la revendication 3, caractérisée en ce que dans chaque chambre (11) est disposé un joint (12) étanchéisant le moyeu (3) envers l'extérieur.

5. Unité d'outil coupant selon la revendication 4, caractérisée en ce que le joint (12) est formé par une garniture toroïdale en caoutchouc, respectivement par un anneau quadratique.

6. Unité d'outil coupant selon une des revendications 1 à 5, caractérisée en ce que le couteau à tailler (4) est fixé par un raccord adhésif sur une portée de centrage (6) du moyeu (3).

7. Unité d'outil coupant selon une des revendications 1 à 6, caractérisée en ce que l'anneau de guidage (5) est divisé au moins en deux parties par des plans de séparation axiaux.

8. Unité d'outil coupant selon la revendication 7, caractérisée en ce que les parties de l'anneau de guidage (5) sont connectables sans joint moyennant des vis (18) disposées transversalement par rapport aux plans de séparation.

9. Unité d'outil coupant selon une des revendications 1 à 8, caractérisée en ce que pour le montage du moyeu (3) sur l'arbre (2) est prévue une douille de montage (21) d'un diamètre extérieur légèrement cônique qui est connectable avec l'extrémité de l'arbre (2) respectif et éliminable après le montage du moyeu (3).

10. Unité d'outil coupant selon la revendication 9, caractérisée en ce que la douille de montage (21) est connectable de manière centrée sur un tenon (20) prévu pour la disposition du coussinet.

Fig.1

Fig.2

Fig.3